# EUROPÄISCHE PATENTSCHRIFT

(11) **EP 1 180 471 B1**
(45) Veröffentlichungstag und Bekanntmachung des Hinweises auf die Patenterteilung: **25.05.2005**
(21) Anmeldenummer: 01118229.2
(22) Anmeldetag: 30.07.2001
(51) Int. Cl.: B62D 25/06, B62D 65/00

(54) **Modulartiges Fahrzeugdach**
Modular vehicle roof
Toit de véhicule modulaire

(30) Priorität: 08.08.2000 DE 10039522
(43) Veröffentlichungstag der Anmeldung: 20.02.2002
(73) Patentinhaber: ArvinMeritor GmbH, 63128 Dietzenbach (DE)
(72) Erfinder: Böhm, Horst, 60599 Frankfurt (DE); Becher, Thomas, 63110 Rodgau (DE); Grimm, Rainer, 60599 Frankfurt (DE)
(74) Vertreter: Oppermann, Mark, Dipl.-Ing.

(56) Entgegenhaltungen:
- EP-A- 1 010 559
- DE-A- 19 709 016

## Beschreibung

Die Erfindung bezieht sich auf ein insbesondere für Kraftfahrzeuge bestimmtes modulartiges Fahrzeugdach entsprechend dem Oberbegriff des Patentanspruchs 1.

Derartige modulartig einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband erfreuen sich solche Fahrzeugdachmodule zunehmender Bedeutung.

Bei einem bekannten Fahrzeugdach (DE 197 09 016 A1) ist in einer Ausführungsform eine vormontierte Schiebedacheinheit in das Dachmodul integriert, die beispielsweise einen als Glasdeckel ausgebildeten Schiebedeckel aufweist. Der Glasdeckel besitzt eine von den Deckelabmessungen vorgegebene und damit eine nur begrenzte Durchsichtsfläche.

Für ein Kraftfahrzeugschiebedach mit einem einer Dach öffnung verlagerbar zugeordneten Deckel ist ein unterhalb des Deckels angeordnetes Sonnenrollo (EP 1 010 559 A1) vorgeschlagen worden, dessen Rollobahn auf eine dachseitig gehalterte Wickelspule aufrollbar und in den Randbereichen gegen Flatter - und Schwingungsbewegungen festgehalten ist.

Der vorliegenden Erfindung liegt die Aufgabe zugrunde, ein modulartig vorgefertigtes Fahrzeugdach der eingangs angegebenen Ausbildung bereitzustellen, in welches keine Schiebedacheinheit integriert ist und das dennoch einen gewünschtenfalls abschirmbaren Durchblick ermöglicht.

Diese Aufgabe wird erfindungsgemäß durch die im Patentanspruch 1 angegebenen Merkmale gelöst. Vorteilhafte oder zweckmäßige Weiterbildungen gehen aus den Unteransprüchen hervor und sind nachfolgend ebenfalls näher erläutert. Das mit der Erfindung vorgeschlagene Modulfahrzeugdach sieht vor, daß die aus Schaumkunststoff geformte Innenschale rahmenartig geformt und unter Bildung einer Panorama-Durchsichtsfläche nur im Randbereich der insgesamt aus Glas oder einem transparenten Kunststoff gebildeten Außenschale vorgesehen ist. Diese Ausbildung führt zu vergleichsweise großen Abmessungen der Durchsichtsfläche, wie sie mit durchsichtigen Schiebedeckeln einer Schiebedachkonstruktion nicht erzielbar sind. Durch die erfindungsgemäße Anordnung eines Sonnenrollos unterhalb der Panorama-Durchsichtsfläche, das mittels in die rahmenartig geformte Innenschale eingeschäumter Elemente an der Innenschale gehalten ist, kann die Durchsichtsfläche vollständig oder auch partiell durch das Sonnenrollo abgeschirmt werden, so daß unerwünschte Aufheizungen des Fahrzeuginnenraums durch intensive Sonneneinstrahlung ebenso vermeidbar sind wie unerwünschte Einblicke von außen. Durch Einschäumung aller das Sonnenrollo haltenden Elemente in die rahmenartige Innenschale wird eine einfache und funktionsfähige Vormontage des Dachmoduls erreicht.

Entsprechend Anspruch 2 ist das Sonnenrollo auf eine in einem Hohlraum des hinteren Rahmenteils der rahmenartig geformten Innenschale angeordnete Wickelspule aufwickelbar und ist durch einen Spalt zwischen dem hinteren Rahmenteil und der Außenschale hindurchgeführt. Die Wickelspule ist bei dieser vorteilhaften Anordnung vom Fahrzeuginnenraum her nicht sichtbar.

Um eine praktisch vollständige Abdeckung der Panorama-Durchsichtsfläche erzielen zu können, ist gemäß Anspruch 3 vorgesehen, daß die Breite des Sonnenrollos zuzüglich beidseitiger Bewegungsspalte der Breite der Panorama-Durchsichtsfläche entspricht, wobei das Sonnenrollo mindestens entsprechend der Länge der Panorama-Durchsichtsfläche von der Wickelspule abwickelbar ist.

Zur Führung des Sonnenrollos kann die Anordnung entsprechend Anspruch 4 so getroffen sein, daß in die beiden seitlichen Rahmenteile der rahmenartig geformten Innenschale jeweils eine Führungsschiene eingeschäumt ist, wobei die beiden Führungsschienen zueinandergekehrt angeordnet sind und einen vorderen Querstab verschiebbar führen, an welchem das vordere Ende des Sonnenrollos befestigt ist. Verschiebungen des Querstabs in den beiden seitlichen Führungsschienen führen je nach Bewegungsrichtung zu einer Verkleinerung oder Vergrößerung der Rollofläche und damit umgekehrt zu einer Vergrößerung oder Verkleinerung der Panorama-Durchsichtsfläche. Durch diese stufenlose Einstellmöglichkeit kann das Ausmaß des gewünschten Lichteinfalls reguliert werden.

Die vorstehend geschilderte Anbringung von seitlichen Führungsschienen eröffnet gemäß Anspruch 5 die vorteilhafte Möglichkeit, an beiden Enden des vorderen Querstabs Mitnehmer anzubringen, welche den Querstab in den beiden Führungsschienen verschiebbar führen und an welche in den Führungsschienen drucksteif geführte Gewindekabel angreifen, die in das vordere Rahmenteil der rahmenartig geformten Innenschale umgelenkt sind und dort mit dem Zahnritzel einer Antriebsvorrichtung für Verschiebebewegungen des Querstabs eingreifen.

Diese Antriebsvorrichtung kann ein herkömmlicher Kurbelantrieb sein, vorzugsweise umfaßt die Antriebsvorrichtung jedoch einen Elektrogetriebemotor für das Zahnritzel, der in einem Hohlraum des vorderen Rahmenteils der rahmenartig geformten Innenschale angeordnet ist, wie aus Anspruch 6 hervorgeht. Bei dieser Anordnung ist auch die Antriebsvorrichtung vom Fahrzeuginnenraum her unsichtbar in die rahmenartig geformte Innenschale integriert.

Weitere Einzelheiten der Erfindung werden nachfolgend anhand der ein Ausführungsbeispiel darstellenden Zeichnungen näher erläutert. Darin zeigt:
- Fig. 1: eine schematische Perspektivansicht eines schon an einer Kraftfahrzeugkarosserie angebrachten Fahrzeugdachmoduls,
- Fig. 2: den abgebrochenen Schnitt durch einen Seitenbereich des Fahrzeugdachmoduls entsprechend der Schnittverlaufslinie II-II in Fig. 1,
- Fig. 3: den abgebrochenen Schnitt durch den vorderen Bereich des Dachmoduls entsprechend der Schnittverlaufslinie III-III in Fig. 1,
- Fig. 4: den abgebrochenen Schnitt durch den hinteren Bereich des Dachmoduls entsprechend der Schnittverlaufslinie IV-IV in Fig. 1 und
- Fig. 5: den abgebrochenen Axialschnitt durch die Wickelspule entsprechend der Schnittverlaufslinie V-V in Fig. 4.

Eine rahmenartige Innenschale 1 des Dachmoduls ist aus einem Schaumkunststoff geformt und umfaßt ein hinteres Rahmenteil 2, zwei symmetrisch zueinander ausgebildete seitliche Rahmenteile 3 sowie ein vorderes Rahmenteil 4. Die Innenschale 1 ist durch Anschäumen mit einer sogenannten Dachhaut 5, welche die Außenschale des Dachmoduls bildet, zu einer Sandwichstruktur fest verbunden. Die Rahmenteile 2, 3 und 4 sind unterschiedlich ausgebildet, wie nachfolgend noch näher erläutert wird. Den vier Rahmenteilen ist jedoch gemeinsam, daß sie auf die ihnen zugeordneten Rahmenteile des Karosserierahmens 6 aufgelegt und damit fest verbunden sind. Zu diesem Zweck sind die Rahmenteile 2 bis 4 mit eingeformten Aufnahmenuten 7 versehen, in welche das Dachmodul gegenüber dem Karosserierahmen 6 abdichtende und zugleich daran befestigende Kleberraupen 8 Aufnahme finden.

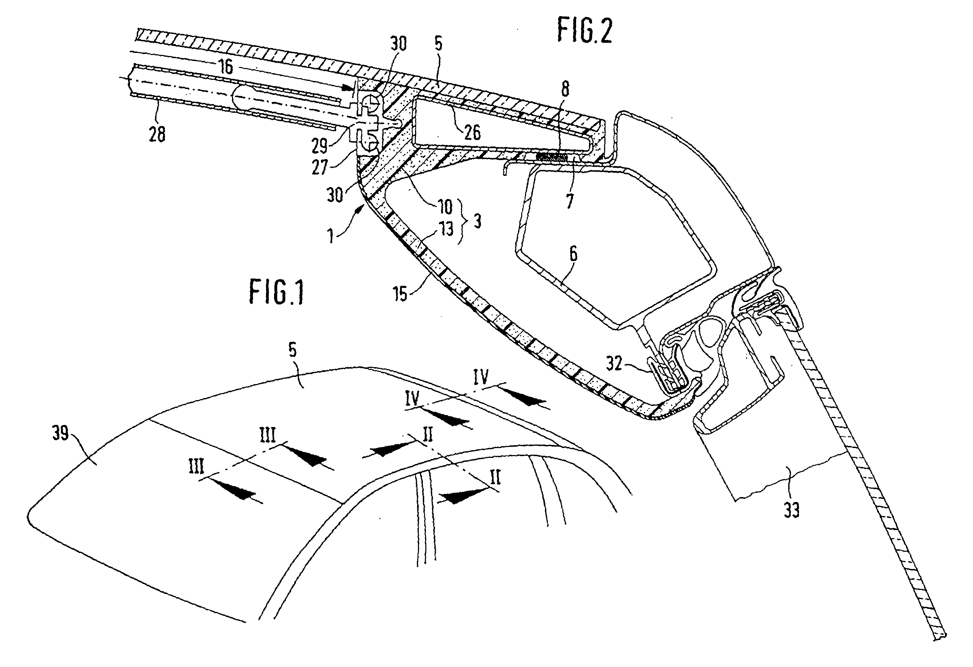

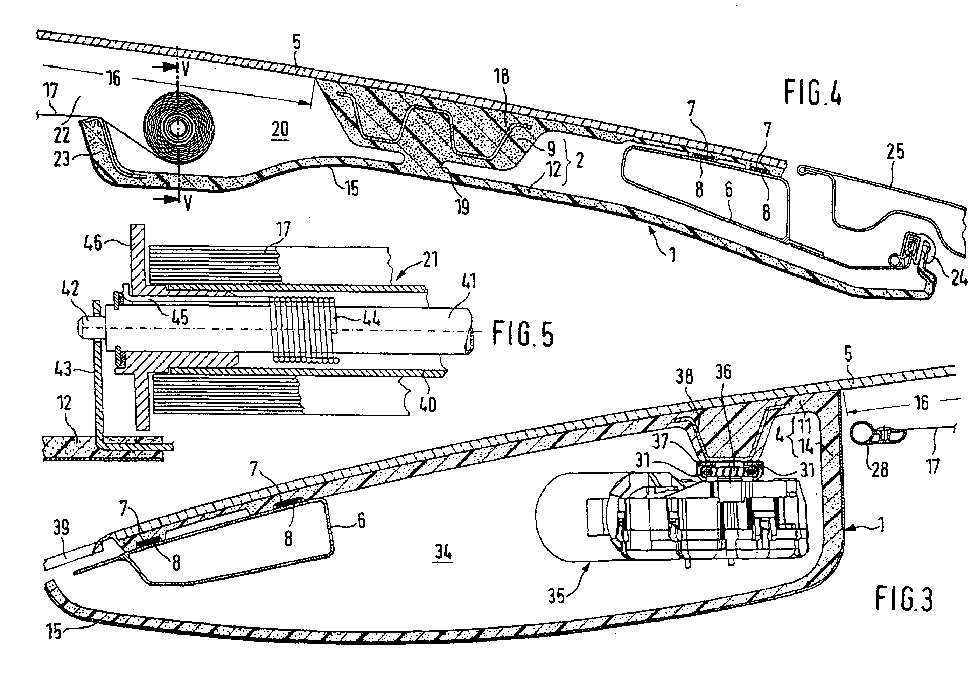

Im gezeigten Ausführungsbeispiel bestehen die Rahmenteile 2 bis 4 jeweils aus einem der Dachhaut 5 zugekehrten oberen Rahmenelement 9 (Fig. 4) bzw. 10 (Fig. 2) bzw. 11 (Fig. 3), welches dem Karosserierahmen 6 aufliegt, und jeweils aus einem mit dem oberen Rahmenelement fest verbundenen, im gezeigten Beispiel damit einteilig geformten, unteren Rahmenelement 12 (Fig. 4) bzw. 13 (Fig. 2) bzw. 14 (Fig. 3). Die unteren Rahmenelemente 12 bis 14 stehen im gezeigten Beispiel über die Außenränder der Dachhaut 5 über und sind für den Durchtritt durch die von dem Karosserierahmen 6 begrenzte Karosserieöffnung nach unten ohne bleibende Deformation umbiegbar und dienen in diesen Bereichen zur Verkleidung des Karosserierahmens 6, an welchem sie mit ihren Außenrändern auf geeignete Weise befestigt sind. Eine derartige Anordnung entspricht im Prinzip dem aus der DE 197 09 016 A1 bekannten Moduldach.

Geeignete Werkstoffe für die Innenschale 1 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Alle Konturen der Innenschale 1 werden durch entsprechende Formgebung der Schäumform (nicht dargestellt) gebildet. Die Innenflächen, d.h. die dem Fahrzeuginnenraum zugekehrten Flächen, der Rahmenteile 2 bis 4 der Innenschale 1 können zur dekorativen Ausgestaltung mit einem textilen oder folienartigen Bezugsmaterial 15 beschichtet sein.

Die Dachhaut 5 besteht bis zu ihren Rändern durchgehend aus Glas oder einem geeigneten durchsichtigen Kunststoff und kann mit einer wärmedämmenden und gegenüber einem übermäßigen UV-Strahlenanteil schützenden Beschichtung versehen sein. Die rahmenartige Innenschale 1 begrenzt eine den größten Teil der gesamten Dachfläche einnehmende Panorama-Durchsichtsfläche 16, wie in den Figuren 2, 3 und 4 durch Maßlinien und Maßhilfslinien angedeutet ist. Unterhalb der Panorama-Durchsichtsfläche 16 ist ein Sonnenrollo 17 angeordnet, das mittels in die rahmenartig geformte Innenschale 1 auf noch zu beschreibende Weise eingeschäumter Elemente an der Innenschale 1 gehalten ist.

Das aus Fig. 4 ersichtliche hintere Rahmenteil 2 der Innenschale 1 ist in seinem oberen Rahmenelement 9 mit einem eingeschäumten Verstärkungsprofil 18 versehen, das in einem verdickten Bereich des oberen Rahmenelements 9 angeordnet ist. An diesen verdickten Bereich ist über einen Verbindungssteg 19 das untere Rahmenelement 12 angeschlossen, das sich mit einem Teilbereich nach vorn und mit einem anderen Teilbereich zur Verkleidung des hinteren Rahmenteils des Karosserierahmens 6 nach hinten erstreckt. Der sich nach vorn erstreckende Teilbereich bildet einen Hohlraum 20, der oben von der Dachhaut 5 und hinten von dem oberen Rahmenelement 9 begrenzt wird. Das Sonnenrollo 17 ist auf eine in dem Hohlraum 20 angeordnete Wickelspule 21 aufwickelbar und ist durch einen Spalt 22 zwischen dem unteren Rahmenelement 9 des hinteren Rahmenteils 2 und der Außenschale 5 hindurchgeführt. Dabei gleitet das Sonnenrollo 17 auf einer profilverstärkten Aufkantung 23 des unteren Rahmenelements 12. Der sich nach hinten erstreckende Teilbereich des unteren Rahmenelements 12 ist über einen Keder 24 fest mit dem Karosserierahmen 6 verbunden. Oberhalb des Keders 24 und hinten an die Dachhaut 5 anschließend befindet sich der abgebrochene Fensterrahmen 25 einer Fahrzeughecktür.

Dem in Fig. 2 dargestellten Seitenbereich des Fahrzeugdachs entspricht der nicht dargestellte gegenüberliegende Seitenbereich spiegelbildlich. Im oberen Rahmenelement 10 des seitlichen Rahmenteils 3 befinden sich ein die rahmenartige Innenschale 1 und damit das Dachmodul insgesamt aussteifendes umschäumtes Hohlkammerprofil 26 und eine eingeschäumte Führungsschiene 27. Die beiden zueinandergekehrt angeordneten Führungsschienen 27, von denen in Fig. 2 nur eine dargestellt ist, führen einen vorderen Querstab 28 verschiebbar, an welchem das vordere Ende des Sonnenrollos 17 befestigt ist (Fig. 3). An beiden Enden des vorderen Querstabs 28 sind Mitnehmer 29 angebracht, welche den Querstab 28 in den Führungsschienen 27 verschiebbar führen. Die Führungsschienen 27 besitzen jeweils zwei übereinanderliegend angeordnete Führungskanäle 30, in welchen Gewindekabel 31 (Fig. 3) drucksteif geführt sind, wie das aus Schiebedachantrieben an sich bekannt ist. Auf der in Fig. 2 dargestellten Seite des Sonnenrollos 17 ist eines der Gewindekabel 31 mit dem Mitnehmer 29 fest verbunden, während auf der anderen nicht dargestellten Seite des Sonnenrollos 17 das andere Gewindekabel 31 mit dem anderen Mitnehmer 29 verbunden ist. Wie bei Schiebedachantrieben üblich, führen die Gewindekabel 31 bei dem ausschließlich gleichzeitig möglichen Antrieb gegenläufige synchrone Verschiebebewegungen in ihren Führungskanälen 30 aus und nehmen dabei über die Mitnehmer 29 den vorderen Querstab 28 je nach Antriebsrichtung nach vorn oder nach hinten mit.

Wie aus Fig. 2 weiter hervorgeht, verkleidet das untere Rahmenelement 13 des seitlichen Rahmenteils 3 der Innenschale 1 den Karosserierahmen 6 und ist damit über einen Keder 32 verbunden, der zugleich eine innere Dichtung für die abgebrochen dargestellte Fahrzeugtür 33 bildet.

Die in den seitlichen Führungsschienen 27 drucksteif geführten beiden Gewindekabel 31 sind in das in Fig. 3 dargestellte vordere Rahmenteil 4 der Innenschale 1 umgelenkt und werden dort entsprechend drucksteif in Führungskanälen verschiebbar geführt (nicht dargestellt). Das vordere Rahmenteil 4 enthält einen oben von dem oberen Rahmenelement 11 und unten und hinten von dem unteren Rahmenelement 14 begrenzten und geschlossenen Hohlraum 34. Im vorderen Rahmenteil 4 ist ein Elektrogetriebemotor 35 im Hohlraum 34 angeordnet, der mit einem Zahnritzel 36 mit beiden Gewindekabeln 31 innerhalb eines Antriebsgehäuses 37 eingreift. Der Elektrogetriebemotor 35 ist über das Antriebsgehäuse 37 fest mit einem Versteifungsprofil 38 verbunden, welches in eine Verdickung des oberen Rahmenelements 11 eingeschäumt ist. Das untere Rahmenelement 14 ist vorn bis etwa zu der strichpunktiert angedeuteten Windschutzscheibe 39 unter Verkleidung des Karosserierahmens 6 geführt, mit welchem es über Keder od.dgl. (nicht dargestellt) fest verbunden ist.

Die Wickelspule 21 des Sonnenrollos 17 ist in Fig. 5 dargestellt. Die Wickelspule 21, auf welche die Rollobahn des Sonnenrollos 17 aufwickelbar ist, besitzt einen rohrförmigen Wickelkörper 40, der eine Lagerwelle 41 konzentrisch umgibt. Die Lagerwelle 41 ist beidseitig (nur eine Seite ist dargestellt) mit Lagerzapfen 42 versehen, die drehbar in Lagerböcken 43 gelagert sind. Die Lagerböcke 43 sind in das untere Rahmenelement 14 des hinteren Rahmenteils 2 der Innenschale 1 eingeschäumt. Eine als Schraubendrehfeder ausgebildete Rückholfeder 44 befindet sich im Raum zwischen dem Wickelkörper 40 und der Lagerwelle 41, ist mit ihrem gezeichneten Ende 45 in der Wickelspule 21 festgelegt und mit ihrem (nicht gezeigten) anderen Ende außerhalb der Wickelspule 21 ortsfest festgelegt. Beim Abwickeln des Sonnenrollos 17 von der Wickelspule 21 wird die Rückholfeder 44 gespannt. Wird der vordere Querstab 28 durch entsprechenden Antrieb in Richtung einer Öffnung des Sonnenrollos nach hinten verlagert, wird das Sonnenrollo infolge der gespannten Rückholfeder 44 selbsttätig auf die Wickelspule 21 aufgewickelt, wobei an dem Wickelkörper 40 befestigte Seitenflansche 46 für die Seitenführung des Sonnenrollos 17 sorgen. Ist das Sonnenrollo 17 gegen die Kraft der Rückholfeder 44 ganz oder teilweise geschlossen, sorgt die permanent wirksame Rückholfeder 44 für die erforderliche Spannung der Rollobahn.

Wie aus Fig. 2 in Verbindung mit Fig. 3 hervorgeht, ist die Breite des Sonnenrollos 17, die in Fig. 2 von der Länge des vorderen Querstabs 28 repräsentiert wird, zuzüglich beidseitiger Bewegungsspalte so ausgeführt, daß sie der Breite der Panorama-Durchsichtsfläche 16 entspricht. Das Sonnenrollo 17 ist maximal entsprechend der Länge der Panorama-Durchsichtsfläche 16 von der Wickelspule 21 abwickelbar, wie das in Fig. 3 angedeutet ist, in welcher der vordere Querstab 28 sich praktisch am vorderen Rahmenteil 4 der Innenschale 1 befindet.

Anstelle der beschriebenen Anordnung eines Sonnenrollos zur vollen oder partiellen Abdeckung der Panorama-Durchsichtsfläche können auch mehrere Sonnenrollos angeordnet werden, die gemeinsam oder unabhängig voneinander betätigbar bzw. antreibbar sind. Anstelle der beschriebenen Anordnung der Antriebsvorrichtung im vorderen Rahmenteil der rahmenartig geformten Innenschale kann die Antriebsvorrichtung auch im hinteren Rahmenteil angeordnet sein.

Es wird ein Fahrzeugdachmodul, bestehend aus einer durchsichtigen Dachhaut, als Außenschale einer Sandwichkonstruktion und aus einer Innenschale der Sandwichkonstruktion vorgeschlagen, bei welchem die Besonderheit darin besteht, daß die Innenschale rahmenartig geformt und unter Bildung einer Panorama-Durchsichtsfläche nur im Randbereich der Außenschale vorgesehen ist, wobei unterhalb der Durchsichtsfläche ein Sonnenrollo angeordnet ist, das mittels in die rahmenartig geformte Innenschale eingeschäumter Elemente an der Innenschale gehalten ist.

## Patentansprüche

1. Modulartiges Fahrzeugdach, insbesondere Kraftfahrzeugdach, das aus einer aus Glas oder aus einem transparenten Kunststoff gebildeten Dachhaut (5) als Außenschale und einer damit fest verbundenen aus Schaumkunststoff geformten Innenschale (1) bestehend sandwichartig ausgebildet ist, getrennt von der Fahrzeugkarosserie hergestellt, mit seinen Außenrändern auf einen Karosserierahmen (6) auflegbar und mit diesem fest verbindbar ist, **dadurch gekennzeichnet, daß** die Innenschale (1) rahmenartig geformt und unter Bildung einer Panorama-Durchsichtsfläche (16) nur im Randbereich der Außenschale (5) vorgesehen ist und daß unterhalb der Durchsichtsfläche (16) mindestens ein Sonnenrollo (17) angeordnet ist, das mittels in die rahmenartig geformte Innenschale (1) eingeschäumter Elemente (27, 43) an der Innenschale (1) gehalten ist.

2. Fahrzeugdach nach Anspruch 1, **dadurch gekennzeichnet, daß** das Sonnenrollo (17) auf eine in einem Hohlraum (20) des hinteren Rahmenteils (2) der rahmenartig geformten Innenschale (1) angeordnete Wickelspule aufwickelbar ist und durch einen Spalt (22) zwischen dem hinteren Rahmenteil (2) und der Außenschale (5) hindurchgeführt ist.

3. Fahrzeugdach nach Anspruch 1 oder 2, **dadurch gekennzeichnet, daß** die Breite des Sonnenrollos (17) zuzüglich beidseitiger Bewegungsspalte der Breite der Panorama-Durchsichtsfläche (16) entspricht und daß das Sonnenrollo (17) mindestens entsprechend der Länge der Panorama-Durchsichtsfläche (16) von der Wickelspule (21) abwickelbar ist.

4. Fahrzeugdach nach einem der vorstehenden Ansprüche, **dadurch gekennzeichnet, daß** in die beiden seitlichen Rahmenteile (3) der rahmenartig geformten Innenschale (1) jeweils mindestens eine Führungsschiene (27) eingeschäumt ist, wobei die beiden Führungsschienen (27) zueinander gekehrt angeordnet sind und einen vorderen Querstab (28) verschiebbar führen, an welchem das vordere Ende des Sonnenrollos (17) befestigt ist.

5. Fahrzeugdach nach Anspruch 4, **dadurch gekennzeichnet, daß** an beiden Enden des vorderen Querstabs (28) Mitnehmer (29) angebracht sind, welche den Querstab (28) in den beiden Führungsschienen (27) verschiebbar führen und an welche in den Führungsschienen (27) drucksteif geführte Gewindekabel (31) angreifen, die in das vordere Rahmenteil (4) der rahmenartig geformten Innenschale (1) umgelenkt sind und dort mit dem Zahnritzel (36) einer Antriebsvorrichtung für Verschiebebewegungen des Querstabs (28) eingreifen.

6. Fahrzeugdach nach Anspruch 5, **dadurch gekennzeichnet, daß** die Antriebsvorrichtung einen Elektrogetriebemotor (35) für das Zahnritzel (36) umfaßt, der in einem Hohlraum (34) des vorderen Rahmenteils (4) der rahmenartig geformten Innenschale (1) angeordnet ist.

## Claims

1. A modular vehicle roof, in particular a motor vehicle roof, which is of a sandwich-type construction consisting of a roof skin (5) formed of glass or of a transparent plastics material as the outer shell and an inner shell (1) connected firmly therewith and molded from foamed plastics material, is produced separately from the vehicle bodywork and may be positioned with its outer edges on a bodywork frame (6) and connected firmly therewith, **characterized in that** the inner shell (1) is formed in the manner of a frame and is provided only in the edge area of the outer shell (5), thereby forming a panoramic transparent surface (16), and **in that** at least one sun-blind (17) is arranged beneath the transparent surface (16), which is held on the inner shell (1) by means of elements (27, 43) foamed into the frame-type inner shell (1).

2. A vehicle roof according to claim 1, **characterized in that** the sun-blind (17) may be wound onto a winding reel arranged in a cavity (20) in the rear frame part (2) of the frame-type inner shell (1) and passes through a gap (22) between the rear frame part (2) and the outer shell (5).

3. A vehicle roof according to claim 1 or 2, **characterized in that** the width of the sun-blind (17) plus movement gaps on either side corresponds to the width of the panoramic transparent surface (16) and **in that** the sun-blind (17) may be unwound from the winding reel (21) at least in accordance with the length of the panoramic transparent surface (16).

4. A vehicle roof according to one of the preceding claims, **characterized in that** at least one guide rail (27) is foamed into each of the two lateral frame parts (3) of the frame-type inner shell (1), the two guide rails (27) being arranged facing one another and displaceably guiding a front crossbar (28), to which the front end of the sun-blind (17) is attached.

5. A vehicle roof according to claim 4, **characterized in that** carriers (29) are fitted to the two ends of the front crossbar (28), which carriers (29) guide the crossbar (28) displaceably in the two guide rails (27) and on which there act threaded cables (31) guided in compressively rigid manner in the guide rails (27), which cables (31) are deflected into the front frame part (4) of the frame-type inner shell (1) and there engage with the pinion (36) of a drive device for displacement movements of the crossbar (28).

6. A vehicle roof according to claim 5, **characterized in that** the drive device comprises an electric geared motor (35) for the pinion (36), which is arranged in a cavity (34) in the front frame part (4) of the frame-type inner shell (1).

## Revendications

1. Toit de véhicule de type modulaire, en particulier toit de véhicule automobile, qui est réalisé à la manière d'un sandwich à partir d'une couverture de toit (5) formée en verre ou en une matière plastique transparente et servant de coque extérieure et d'une coque intérieure (1) façonnée en mousse de plastique et reliée de manière solidaire à celle-ci, et qui est fabriqué séparément de la carrosserie du véhicule, qui peut être posé avec ses bords extérieurs sur un cadre de carrosserie (6) et qui peut être relié de manière solidaire à celui-ci, **caractérisé en ce que** la coque intérieure (1) est formée à la manière d'un cadre et prévue seulement dans la région de bord de la coque extérieure (5) en formant une surface transparente panoramique (16), et **en ce qu'**au-dessous de la surface transparente (16) est agencé au moins un store pare-soleil (17) qui est retenu sur la coque intérieure (1) par des éléments (27, 43) intégrés par moussage dans la coque intérieure (1) formée à la manière d'un cadre.

2. Toit de véhicule selon la revendication 1, **caractérisé en ce que** le store pare-soleil (17) peut être enroulé sur une bobine d'enroulement agencée dans une cavité (20) de la partie de cadre (2) postérieure de la coque intérieure (1) formée à la manière d'un cadre, et est passé à travers une fente (22) entre la partie de cadre (2) postérieure et la coque extérieure (5).

3. Toit de véhicule selon l'une ou l'autre des revendications 1 et 2, **caractérisé en ce que** la largeur du store pare-soleil (17) plus celle des fentes de mouvement bilatérales correspond à la largeur de la surface transparente panoramique (16), et **en ce que** le store pare-soleil (17) peut être déroulé depuis la bobine d'enroulement (21) de manière au moins correspondante à la longueur de la surface transparente panoramique (16).

4. Toit de véhicule selon l'une quelconque des revendications précédentes, **caractérisé en ce qu'**au moins un rail de guidage (27) est intégré par moussage dans chacune des parties latérales de cadre (3) de la coque intérieure (1) formée à la manière d'un cadre, les deux rails de guidage (27) étant agencés tournés l'un vers l'autre et guidant en translation une barre transversale (28) antérieure sur laquelle est fixée l'extrémité antérieure du store pare-soleil (17).

5. Toit de véhicule selon la revendication 4, **caractérisé en ce qu'**aux deux extrémités de la barre transversale (28) antérieure sont montés des tocs d'entraînement (29) qui guident la barre transversale (28) en translation dans les deux rails de guidage (27) et sur lesquels s'engagent des câbles boudinés (31) guidés de manière rigide à la pression dans les rails de guidage (27), lesquels sont déviés jusque dans la partie de cadre antérieure (4) de la coque intérieure (1) formée à la manière d'un cadre et s'y engagent avec le pignon denté (36) d'un dispositif d'entraînement pour des mouvements de translation de la barre transversale (28).

6. Toit de véhicule selon la revendication 5, **caractérisé en ce que** le dispositif d'entraînement comprend un motoréducteur électrique (35) pour le pignon denté (36), qui est agencé dans une cavité (34) de la partie de cadre antérieure (4) de la coque intérieure (1) formée à la manière d'un cadre.
